# EUROPÄISCHE PATENTANMELDUNG

(11) **EP 3 323 325 A1**
(43) Veröffentlichungstag der Anmeldung: **23.05.2018**
(21) Anmeldenummer: 17202779.9
(22) Anmeldetag: 21.11.2017
(51) Int. Cl.: A47J 31/30

(54) **MEHRTEILIGE ESPRESSO-KAFFEEMASCHINE UND VERFAHREN ZUR HERSTELLUNG EINES HEISSGETRÄNKS**

(30) Priorität: 21.11.2016 DE 102016122352; 12.04.2017 DE 102017206350
(71) Anmelder: Scherm, Florian, 95466 Kirchenpingarten (DE)
(72) Erfinder: Scherm, Florian, 95466 Kirchenpingarten (DE)
(74) Vertreter: Benninger, Johannes

(57) **Zusammenfassung**

Es ist eine mehrteilige Espresso-Kaffeemaschine (2) offenbart, welche zumindest einen unteren Wasserkessel (4) zur Aufnahme von Wasser sowie ein mit wenigstens einem Steigrohr (8) ausgestattetes Kannenoberteil (6) zur Aufnahme gebrühten Kaffees umfasst. Weiterhin weist die erfindungsgemäße Espresso-Kaffeemaschine (2) ein zwischen dem Wasserkessel (4) und dem Kannenoberteil (6) einsetzbares Aufnahmeelement (14) zur Aufnahme von losem oder in einer Kaffeekapsel (18) oder einem Zwischenbehälter befindlichem Kaffeepulver auf. Eine Bodenfläche (4*) des Wasserkessels (4) bildet eine Kontaktfläche zur Wärmeübertragung von einer externen Wärmequelle (36). Der Wasserkessel (4) ist mit einer externen Druckquelle (28) zur insbesondere einstellbaren Druckbeaufschlagung des Inneren des Wasserkessels (4) ausgestattet. Weiterhin ist eine von der Bodenseite des Aufnahmeelements (14) in den Wasserkessel (4) reichende untere Steigleitung (20) mit einem temperaturgesteuerten Schaltventil (34) ausgestattet. Das temperaturgesteuerte Schaltventil (34) öffnet bei einer Grenztemperatur des im Wasserkessel (4) erhitzten Wassers. Das geöffnete temperaturgesteuerte Schaltventil (34) lässt das druckbeaufschlagte Wasser durch das mit Kaffee gefüllte Aufnahmeelement (14) hindurchtreten und als gebrühten Kaffee durch das um Kannenoberteil (6) befindliche Steigrohr (8) in das Kannenoberteil (6) strömen.

## Beschreibung

Die vorliegende Erfindung betrifft eine mehrteilige Espresso-Kaffeemaschine gemäß den Merkmalen des unabhängigen Anspruchs 1 sowie ein Verfahren zur Herstellung eines Heißgetränks mit den Merkmalen des Verfahrensanspruchs 15.

Zur mobilen und stromunabhängigen Zubereitung von koffeinhaltigen Heißgetränken, wie insbesondere Kaffee oder Espresso, werden oftmals sogenannte Espresso-Kaffeemaschinen, auch als Espressokannen oder Moka bezeichnet, genutzt. Insbesondere Wanderer, Camper oder Personen, welche verschiedenen Outdoor-Aktivitäten nachgehen, nutzen in vielen Fällen derartige Vorrichtungen, um ohne eine Möglichkeit eines Stromanschlusses, sondern lediglich mit Hilfe einer Wärmequelle Heißgetränke kochen zu können. Zudem sind derartige Kaffeemaschinen auch für eine Kaffee-Zubereitung im Haushalt sehr beliebt.

Üblicherweise besteht eine derartige Espresso-Kaffeemaschine aus einem unteren Wasserkessel, oftmals auch bezeichnet als sogenannter Siedekessel, in welchen Wasser gefüllt werden muss. Ein trichterförmiges Aufnahmeelement, welches einen Aufnahmebereich für Kaffeepulver aufweist, kann in den Wasserkessel eingesetzt werden, sodass der Trichter des trichterförmigen Aufnahmeelements bis in einen unteren Bereich des Wasserkessels und somit bis unterhalb der Wasseroberfläche des in den Wasserkessel gefüllten Wassers reicht. Ein Kannenoberteil, in welches der fertig gebrühte Kaffee schließlich fließt, ist mit einem Steigrohr versehen. Üblicherweise werden der Wasserkessel und das Kannenoberteil mittels beispielsweise einer Schraubverbindung zusammengefügt, sodass über das trichterförmige Aufnahmeelement und das Steigrohr zwischen dem unteren Wasserkessel und dem Kannenoberteil eine Fluidverbindung entsteht.

Um das Wasser in dem Wasserkessel bzw. Siedekessel erhitzen zu können, ist lediglich eine Wärmequelle, wie beispielsweise ein Gas- bzw. Benzinkocher oder eine Feuerstelle, notwendig, welche bei Outdoor-Aktivitäten häufig zur Erwärmung von Speisen genutzt werden. Bei einer Nutzung im Haushalt kann der mit Wasser gefüllte Wasserkessel mittels einer gewöhnlichen Herdplatte erhitzt werden. Eine Bodenfläche des unteren Wasserkessels bildet dabei eine bevorzugte Kontaktfläche zur Wärmeübertragung. Das durch die dem Wasserkessel zugeführte Wärme erhitzende Wasser verdampft, sodass nun aufgrund des entstehenden Überdrucks in dem Wasserkessel das erhitzte Wasser über den Trichter des trichterförmigen Aufnahmeelements zu dem in dem Aufnahmebereich aufgenommenen Kaffeepulver gedrückt wird und dieses durchströmt. Um ein Mitreißen des Kaffeepulvers aus dem Aufnahmebereich zu verhindern, weisen die Espresso-Kaffeemaschinen meist ein Feinsieb zwischen dem Aufnahmeelement und dem Steigrohr des Kannenoberteils auf. Nach Durchströmen des Kaffeepulvers mit dem erhitzten Wasser fließt der fertig gebrühte Kaffee schließlich über das Steigrohr des Kannenoberteils in das Kannenoberteil, woraus der Kaffee ausgegossen werden kann.

Herkömmliche Espresso-Kaffeemaschinen weisen jedoch mehrere Nachteile auf. Beispielsweise ist für die Entstehung eines guten Kaffeegeschmacks eine, bei der Durchströmung des Kaffeepulvers mit dem erhitzten Wasser vorhandene, Wassertemperatur von 92°C bis 96°C ideal. Die Wassertemperatur hat insbesondere einen großen Einfluss darauf, wie viele und welche Aromastoffe aus dem Kaffeepulver gelöst werden. Ist die Wassertemperatur höher als 96°C, so erhält der fertige Kaffee einen Geschmack, welcher meist als bitter, beißend oder verbrannt eingeordnet wird. Eine zu lange Kochzeit gebrühten Kaffees mit zu hoher Temperatur beeinflusst ebenfalls den Kaffeegeschmack. Eine zu niedrige Wassertemperatur, beispielsweise weniger als 85°C, kann einen wässrigen bis sauren Kaffeegeschmack zur Folge haben. Wird für die Zubereitung des Kaffees mit einer Espresso-Kaffeemaschine eine der oben genannten Wärmequellen, also ein Gas- bzw. Benzinkocher, eine Feuerstelle oder eine Herdplatte, genutzt, lässt sich die Temperatur bzw. die Dauer der Erhitzung des Wassers kaum bis gar nicht überwachen bzw. beeinflussen, sodass meist die ideale Wassertemperatur zur Herstellung des Kaffees verpasst wird und der gebrühte Kaffee einen unguten Geschmack erhält.

Zu hohe Wassertemperaturen können zudem eine enorme Drucksteigerung innerhalb des Wasserkessels zur Folge haben. Umgekehrt kann hoher Druck auch einen gewissen Einfluss auf die Wassertemperatur haben. Wird das erhitzte Wasser mit einem zu hohen Druck durch das Kaffeepulver gepresst, kann der gebrühte Kaffee ebenfalls einen bitteren Geschmack erhalten. Um das ebenfalls nicht zu unterschätzende Sicherheitsrisiko der Entstehung zu großen Druckes in dem Wasserkessel zu vermeiden, sind neuere Modelle der Espresso-Kaffeemaschinen bereits mit Sicherheitsventilen ausgestattet, sodass Luft aufgrund des Überdrucks kontrolliert aus dem Wasserkessel entweichen kann. Bei herkömmlichen Espresso-Kaffeemaschinen wird der Druck mit Hilfe des Sicherheitsventils auf 1,5 bar bis 3 bar begrenzt. Dieser niedrige Druck ist jedoch bereits für die Herstellung eines richtigen Espressos zu niedrig, sodass derartige Espresso-Kaffeemaschinen lediglich zur Herstellung von Kaffee genutzt werden können. Durch den genannten niedrigen Druck kann sich beim Brühvorgang zudem kein bzw. lediglich leicht flüchtiger sogenannter "Crema" auf dem Kaffee bilden.

Aus dem Dokument DE 60 2005 006 315 T1 ist beispielsweise ein Mokkakaffeebereiter bekannt, welcher einen mit Wasser zu füllenden Siedekessel aufweist, der mit einem, einen Ausgeber aufweisenden Behälter verbindbar ist. Zwischen dem Siedekessel und dem Ausgeber sind ein Kaffeeaufnahmefilter sowie ein Zwischenfilter vorgesehen. Zur Temperaturkontrolle des mittels eines Brenners zu erhitzenden Wassers ist eine Temperaturkontrolleinrichtung, beispielsweise in Form eines Thermometers, am Siedekessel angebracht. Sobald eine vorgesehene Temperatur gemessen wird, kann mittels einer Druckgasflasche, welche ein gasförmiges Fluid beinhaltet, der Druck in dem Siedekessel erhöht werden, wodurch das temperierte Wasser durch den Kaffeeaufnahmefilter gepresst wird, und anschließend der fertig gebrühte Kaffee in den Ausgeber fließen kann.

Das beschriebene System weist jedoch mehrere Nachteile auf. So ist die Temperaturkontrolleinrichtung stets zu beobachten, um den Moment der idealen Wassertemperatur erkennen und nutzen zu können. Zudem muss eine Druckerhöhung mittels der Druckgasflasche manuell und abhängig von der Wassertemperatur ausgelöst werden. Die Druckgasflasche stellt außerdem einen erheblichen und nicht zu unterschätzenden Kostenfaktor dar, da diese bei Verbrauch regelmäßig ausgetauscht werden muss.

Weiterhin wird häufig die üblicherweise vorgesehene Verwendung von losem Kaffeepulver bei Nutzern beschriebener Espresso-Kaffeemaschinen als unhandlich und umständlich angesehen. Das lose Kaffeepulver ist unpraktisch zu transportieren und ohne weitere Hilfsmittel, wie einer Waage oder einer Messeinrichtung, schwer zu portionieren. Eine unsachgemäße Lagerung des losen Kaffeepulvers hat zudem einen Aroma- und Geschmacksverlust des Kaffees zur Folge. Auch der Mahlgrad des Kaffeepulvers hat einen Einfluss auf den Geschmack des Kaffees. Je feiner der Mahlgrad des Kaffeepulvers ist, desto kürzer wird zwar die Zubereitungszeit, feines Kaffeepulver ist jedoch noch schwieriger zu portionieren und führt oftmals zu Verschmutzungen durch umherfliegende Kaffeepartikel. Übermäßig feines Kaffeepulver kann zudem gegebenenfalls durch den aufsteigenden Wasserstrom durch das Feinsieb in das obere Behältnis mitgerissen werden. Es sind bereits Espresso-Kaffeemaschinen bekannt, die daher statt der Nutzung losen Kaffeepulvers für eine Verwendung von sogenannten Kaffeekapseln ausgelegt sind.

So zeigt beispielsweise die EP 2 451 323 B1 einen trichterförmigen Kaffeehalter für eine Mokka-Kaffeemaschine, welcher in den Wasserkessel der Kaffeemaschine ragt. In einem Aufnahmebereich des Kaffeehalters kann eine Kaffeekapsel aufgenommen werden, welche mittels einer Durchlöcherungseinrichtung durchlöchert wird, sodass erhitztes Wasser von dem Wasserkessel durch die Kaffeekapsel in die Haltevorrichtung strömen kann.

Angesichts der im Stand der Technik identifizierten Nachteile und Unzulänglichkeiten kann es daher als vorrangige Aufgabe der vorliegenden Erfindung angesehen werden, eine Espresso-Kaffeemaschine zur Verfügung zu stellen, welche die zuvor beschriebenen Nachteile des Stands der Technik weitgehend vermeidet, zudem eine komfortable und sichere Nutzung zur Kaffeebereitung erlaubt, sowie die Möglichkeit einer Nutzung idealtemperierten Wassers für den Brühvorgang zu erhalten. Entsprechendes gilt für das nachfolgend beschriebene Verfahren zur Zubereitung eines Heißgetränkes, das ebenfalls Gegenstand der vorliegenden Erfindung ist.

Die obige Aufgabe wird durch eine Espresso-Kaffeemaschine gelöst, welche die Merkmale des Patentanspruchs 1 umfasst. Weitere vorteilhafte Ausgestaltungen werden durch die abhängigen Ansprüche beschrieben. So schlägt die Erfindung zur Erreichung des genannten Ziels eine mehrteilige Espresso-Kaffeemaschine vor, welche zumindest einen unteren Wasserkessel zur Aufnahme von Wasser sowie einen auf dessen Oberseite befestigbaren und mit wenigstens einem Steigrohr ausgestatteten Kannenoberteil zur Aufnahme gebrühten Kaffees umfasst. Weiterhin weist die erfindungsgemäße Espresso-Kaffeemaschine ein zwischen dem Wasserkessel und dem Kannenoberteil einsetzbares Aufnahmeelement zur Aufnahme von losem oder in einer Kaffeekapsel oder einem Zwischenbehälter befindlichem Kaffeepulver auf. Eine Bodenfläche des Wasserkessels bildet eine Kontaktfläche zur Wärmeübertragung von einer externen Wärmequelle. Bei der Wärmequelle kann es sich um beliebige externe Wärmequellen handeln, beispielsweise in Form eines Gas- oder Benzinkochers, einer Feuerstelle oder einer Herdplatte.

Der Wasserkessel kann optional mit einer externen Druckquelle zur insbesondere einstellbaren Druckbeaufschlagung des Inneren des Wasserkessels ausgestattet sein. Weiterhin ist eine von der Bodenseite des Aufnahmeelements in den Wasserkessel reichende untere Steigleitung mit einem temperaturgesteuerten Schaltventil ausgestattet. Das temperaturgesteuerte Schaltventil öffnet bei einer Grenztemperatur des im Wasserkessel erhitzten Wassers. Das geöffnete temperaturgesteuerte Schaltventil lässt das druckbeaufschlagte Wasser durch das mit Kaffeepulver gefüllte Aufnahmeelement hindurchtreten und als gebrühten Kaffee durch das im Kannenoberteil befindliche Steigrohr in das Kannenoberteil strömen.

Vorzugsweise weist das Aufnahmeelement einen Aufnahmebereich zur Aufnahme einer Kaffeekapsel oder eines Zwischenbehälters auf. Auf diese Weise ist die Espresso-Kaffeemaschine nicht weiter auf die Nutzung von losem Kaffeepulver angewiesen. Insbesondere Kaffeekapseln zeichnen sich durch Handlichkeit und einfache Handhabung aus. Zudem wird das sich in der Kaffeekapsel befindliche Kaffeepulver aromaversiegelt, sodass gebrühter Kaffee auch nach langer Lagerung der Kaffeekapsel vollmundiges Aroma aufweisen kann. Auch Zwischenbehälter bieten ebenfalls den Vorteil der Handlichkeit, müssen jedoch vor dem Einsetzen in die Espresso-Kaffeemaschine selbst mit Kaffeepulver befüllt werden. In vielen Fällen stellen Zwischenbehälter eine kostengünstigere Alternative zu herkömmlichen Kaffeekapseln dar. Bei den einzusetzenden Kaffeekapseln kann es sich vorzugsweise um handelsübliche Kaffeekapseln handeln. Die gegebenenfalls vorgesehenen Zwischenbehälter können ebenfalls handelsübliche Einsätze darstellen, jedoch ist auch die Ausbildung eines speziell für die vorliegende Espresso-Kaffeemaschine ausgebildeten Zwischenbehälters denkbar.

Zur Durchlöcherung einer in den Aufnahmebereich des Aufnahmeelements einzusetzenden Kaffeekapsel oder eines Zwischenbehälters kann das Aufnahmeelement Mittel zur Durchlöcherung aufweisen, sodass erhitztes Wasser aus dem Wasserkessel in die Kaffeekapsel oder den Zwischenbehälter strömen kann. Bei den Mitteln zur Durchlöcherung der Kaffeekapsel oder des Zwischenbehälters kann es sich beispielsweise um spitzförmig zulaufende oder nadelförmige Elemente handeln. Diese Elemente können Teil einer Einstechplatte sein. Da es sich bei dem Material herkömmlicher Kaffeekapseln zumeist um Aluminium, seltener um einen Kunststoff, handelt, ist ein Durchlöchern der Kaffeekapsel mittels des Mittels zur Durchlöcherung auf einfache Weise möglich. Beispielsweise können durch leichten Druck bei einem Einsetzen der Kaffeekapsel in den Aufnahmebereich des Aufnahmeelements die Mittel zur Durchlöcherung durch das Material der Kaffeekapsel gedrückt oder gestoßen werden. Ebenso ist es denkbar, dass die Kaffeekapsel bei Zusammenfügen des Wasserkessels und des Kannenoberteils gegen die Mittel zur Durchlöcherung gedrückt, und somit durchlöchert wird. Da Zwischenbehälter in den meisten Fällen zur mehrfachen Verwendung ausgelegt sind, können diese bereits zu den Mitteln zur Durchlöcherung passende Löcher aufweisen, sodass ein weiteres Durchlöchern des Zwischenbehälters nicht notwendig ist.

Weiterhin kann das Kannenoberteil ein Mittel zur Perforation eines zur Abdeckung und/oder zum Verschluss einer Kaffeekapsel oder eines Zwischenbehälters vorgesehenen Verschlusselements aufweisen. Vorzugsweise handelt es sich bei dem Mittel zur Perforation des Verschlusselements um eine sogenannte Pyramidenplatte. Üblicherweise weisen Kaffeekapseln bzw. Zwischenbehälter ein Verschlusselement auf, um sich in der Kaffeekapsel bzw. in dem Zwischenbehälter befindliches Kaffeepulver einzuschließen. Bei Kaffeekapseln verwendeten Verschlusselementen kann es sich beispielsweise um dünne Metall, Zellulose- und/oder Kunststofffolien handeln. Bei Zwischenbehältern werden neben den zuvor genannten Folien beispielsweise auch Gummi-, Kunststoff- oder Metallverschlüsse vorgesehen. Das Mittel zur Perforation weist vorzugsweise mehrere, gleichmäßig über den Bereich des Verschlusselements verteilte Perforationselemente, beispielsweise in Form von pyramidenförmig hervorstehenden Elementen, auf.

Durch die als optional anzusehenden Perforationselemente können die Perforationen in das Verschlusselement eingebracht werden, sodass das erhitzte Wasser bzw. der fertig gebrühte Kaffee, welcher aufgrund der Durchströmung des erhitzten Wassers durch das sich in der Kaffeekapsel bzw. dem Zwischenbehälter befindliche Kaffeepulver entsteht bzw. entstanden ist, aus der Kaffeekapsel bzw. dem Zwischenbehälter in Richtung des Kannenoberteils strömen kann. Handelt es sich bei dem Verschlusselement eines Zwischenbehälters um ein Verschlusselement aus Metall oder Kunststoff, so kann das Verschlusselement wiederum bereits zu den Perforationselementen passende Perforationen aufweisen. Das Mittel zur Perforation kann weiterhin eine gleichmäßig verteilte feine Durchlöcherung bzw. feine Kanäle aufweisen, welche insbesondere eine (Fluid-)Verbindung zu dem Steigrohr des Kannenoberteils herstellen. Das Mittel zur Perforation kann durch das Verbinden des Wasserkessels mit dem Kannenoberteil zumindest in die direkte Nähe des Verschlusselements der Kaffeekapsel bzw. des Zwischenbehälters gebracht werden. Durch das Durchströmen der Kaffeekapsel bzw. des Zwischenbehälters mit dem erhitzten Wasser, sowie durch den zumindest während des Brühvorgangs im Wasserkessel herrschenden Drucks wird die Kaffeekapsel oder der Zwischenbehälter bzw. dessen Verschlusselement vorzugsweise zudem gegen das Mittel zur Perforation gepresst, und dadurch perforiert.

Die erfindungsgemäße Espresso-Kaffeemaschine kann darüber hinaus ein Aufnahmeelement aufweisen, welches zur Aufnahme losen Kaffeepulvers ausgebildet ist. Um ein Mitreißen von Kaffeepulverpartikeln durch das Steigrohr, und damit in das Kannenoberteil zu verhindern, kann ein feiner Siebträger vorgesehen sein, welcher in dem Aufnahmebereich des Aufnahmeelements aufgenommenes Kaffeepulver abdeckt. Der Siebträger kann in zusammengefügter Form des Wasserkessels und des Kannenoberteils in direkter Verbindung mit dem Steigrohr des Kannenoberteils stehen.

In einer weiteren bevorzugten Ausgestaltungsweise der erfindungsgemäßen Espresso-Kaffeemaschine ist das temperaturgesteuerte Schaltventil derartig konfiguriert, dass es einen Wasserdurchfluss durch die untere Steigleitung des Aufnahmeelements bei einer Wassertemperatur von 90°C bis 100°C, vorzugsweise bei einer Wassertemperatur von 92°C bis 96°C, erlaubt. Wie zuvor bereits beschrieben ist erhitztes Wasser, welches eine Temperatur zwischen 92°C bis 96°C aufweist, am besten zur Herstellung eines geschmacklich guten Kaffees oder auch Espressos geeignet. Durch die Durchflussregelung des temperaturgesteuerten Schaltventils bei einer Wassertemperatur von 92°C bis 96°C kann somit sichergestellt werden, dass lediglich Wasser mit einer idealen Brühtemperatur zu dem sich in der Kaffeekapsel oder dem Zwischenbehälter befindenden bzw. losen Kaffeepulver strömen kann. Weist das Wasser eine niedrigere oder höhere Temperatur auf, ist der Wasserdurchfluss geschlossen.

Wahl- oder vorzugsweise handelt es sich bei dem temperaturgesteuerten Schaltventil um ein sog. Thermostatventil. Das Thermostatventil kann als ein mechanisches Thermostatventil ausgebildet sein. Mechanische Thermostatventile können beispielsweise sogenannte Dehnstoffelemente beinhalten, insbesondere eignen sich hier Öl, Wachs, Hartparaffin oder Metalle, welche ein bestimmtes temperaturabhängiges Dehnverhalten aufweisen. Mittels des Dehnstoffelements kann das Thermostatventil so ausgestaltet werden, dass lediglich bei einer Wassertemperatur von 92°C bis 96°C der Durchströmungsweg durch die Steigleitung freigegeben ist. Ein manuelles Eingreifen zur Freigabe der Steigleitung oder ein Stromanschluss zur Versorgung des Schaltventils ist hierbei nicht notwendig. Dadurch, dass der Wasserdurchfluss automatisch geregelt und ein manuelles Eingreifen nicht notwendig ist, kann die Verletzungsgefahr durch erhitztes Wasser, welches beispielsweise Hautverbrennungen verursacht, minimiert werden.

Auch kann vorgesehen sein, dass die erfindungsgemäße Espresso-Kaffeemaschine eine externe Druckquelle in Form einer manuell betätigbaren Luftpumpe aufweist. Die manuell betätigbare Luftpumpe ist insbesondere zur Erzeugung einer anfänglichen Druckbeaufschlagung des Inneren des Wasserkessels von 5 bar bis 10 bar, vorzugsweise von 6 bar bis 8 bar, geeignet. Vorzugsweise ist ein Betätigen der Luftpumpe vor dem Erhitzen des Wassers vorgesehen. So kann das kalte Wasser, ohne Gefahr von Verbrennungen aufgrund erhitzten Wassers oder heißen Metalls des Wasserkessels, manuell bereits mit einem vorgesehenen Druck beaufschlagt werden. Für die Betätigung der Luftpumpe ist lediglich Muskelkraft notwendig, auf eine weitere Energieversorgung kann daher wiederum verzichtet werden. Um den aktuell vorhandenen Druck ablesen zu können, kann der Wasserkessel zudem mit einem Druckanzeigeelement ausgestattet sein. Ist zu geringer Druck innerhalb des Wasserkessels vorhanden, kann auf einfache Weise mittels der externen Druckquelle, bzw. mittels der Luftpumpe der Druck erhöht werden. Insgesamt kann ein derartig hoher Druck im Inneren des Wasserkessels erzeugt werden, sodass sich die erfindungsgemäße Espresso-Kaffeemaschine ebenfalls zur Herstellung von Espresso eignet, bei welchem Brühvorgang üblicherweise zumindest ein Druck von 9 bar benötigt wird. Bei der genannten manuell betätigbaren Luftpumpe kann es sich beispielsweise um eine integrierte Luftpumpe handeln, welche fest an dem Wasserkessel befestigt ist oder in den Wasserkessel integriert ist.

Alternativ ist es denkbar, den Wasserkessel mit einem Ventileinsatz zu versehen. Beispielsweise kann es sich hierbei um einen Einsatz mit einem geeigneten Rückschlagventil handeln, um ein unkontrolliertes Ausströmen von Luft aus dem Wasserkessel zu verhindern und dadurch eine mögliche Gefahrenquelle vorzubeugen. Der Ventileinsatz kann zur Verbindung mit unterschiedlichen, nicht an dem Wasserkessel befestigten bzw. nicht in den Wasserkessel integrierten, externen Druckquellen geeignet sein, um Druckluft in den Wasserkessel einzubringen. Die genannten externen Druckquellen können vorzugsweise zur Erzeugung einer Druckbeaufschlagung von 5 bar bis 10 bar, vorzugsweise von 6 bar bis 8 bar im Inneren des Wasserkessels geeignet sein. Sofern notwendig, ist auch die Zwischenschaltung eines Adapterstückes denkbar, um den Ventileinsatz für unterschiedliche, jeweils vorhandene Druckquellen nutzbar zu machen. Dadurch kann eine Einschränkung auf einzelne, spezielle externe Druckquellen vermieden werden. So kann der Ventileinsatz mit einer externen Druckquelle in Form einer handbetätigbaren Luftpumpe zur Einbringung von Druckluft in den Wasserkessel verbindbar sein. Je nach Verfügbarkeit kann hierzu beispielsweise eine gewöhnliche handbetätigbare Luftpumpe genutzt werden. Als Beispiele für eine derartige Luftpumpe können zum Beispiel herkömmliche Fahrradluftpumpen oder Standluftpumpen genannt werden. Auch die Nutzung von Luftpumpen, welche Druckluft über (Gas-)Kartuschen bereitstellen, ist vorstellbar. In manchen Fällen können sich sogar sogenannte Blasebalg-Luftpumpen zur Drucklufterzeugung eignen.

Weiterhin ist es auch denkbar, zur Einbringung von Druckluft in den Wasserkessel elektrisch oder anderweitig betriebene Druckquellen zu nutzen. Anhand des Ventileinsatzes kann eine derartige elektrisch oder anderweitig betriebene Druckluftquelle mit dem Wasserkessel verbunden werden. Hier bieten sich beispielsweise elektrisch betriebene Druckluftkompressoren an. Insbesondere können hierbei 12V-Kompressoren, welche z.B. über Bordspannungssteckdosen von Automobilen betreibbar sind, oder 230V-Kompressoren, welche über das herkömmliche Haushaltsstromnetz betreibbar sind, eingesetzt werden. Auch eine kompakte Pumpeinheit mit eingebautem Batterie- oder Akkusatz kann sich für den genannten Zweck gut eignen. Eine solche Druckquelle mit elektromotorischem (Klein-)Kompressorantrieb lässt sich schnell und einfach anschließen, insbesondere über eine Schnellkupplung an der Druckleitung, und lässt sich nach Herstellung des gewünschten Druckniveaus im Wasserkessel auch schnell wieder von der Kaffeemaschine trennen. Eine permanente Verbindung des Druckerzeugers mit der Kaffeemaschine ist zwar grundsätzlich möglich, in der Praxis jedoch in aller Regel nicht wünschenswert, da der Druckerzeuger bzw. der elektromotorisch betriebene Kompressor nach Herstellung des Druckniveaus im Wasserkessel nicht mehr benötigt wird und erst für den nächsten Zubereitungszyklus wieder angeschlossen werden muss.

Der Wasserkessel kann zudem mit einem Druckventil ausgestattet sein, durch welches Luft bei Überschreiten eines vorgegebenen Druckrichtwertes ausströmt. Hierdurch ausströmende Luft kann weiterhin als Zeichen einer ausreichenden Druckbeaufschlagung durch die externe Druckquelle gesehen werden. Weiterhin kann auch durch die anschließende Erhitzung des Wassers innerhalb des Wasserkessels weiterer Druck entstehen. Allgemein kann, wie bereits erwähnt, die Erhitzung des Wassers mittels beliebiger externer Wärmequelle vorgenommen werden, beispielsweise in Form eines Gas- oder Benzinkochers, einer Feuerstelle oder einer Herdplatte. In vielen Fällen ist der Wärmeeintrag durch die externe Wärmequelle, und daher die Erhitzung des Wassers sowie die damit verbundene Druckbildung nur schwer kontrollierbar und unregelmäßig. Um daher beispielsweise ein Platzen des Wasserkessels aufgrund eines unkontrollierten Druckanstiegs, und damit eine nicht unerhebliche Gefahrenquelle, zu vermeiden, kann durch das Druckventil Luft bei Überschreiten des vorgegebenen Druckrichtwertes weiterhin Luft kontrolliert ausströmen.

Ein weiteres Druckventil kann an dem Steigrohr des Kannenoberteils vorgesehen sein. Durch das Pressen des fertig gebrühten Kaffees kurz vor dem Ausfließen in das Kannenoberteil durch das Druckventil kann eine Crema entstehen. Vorzugsweise handelt es sich bei dem Druckventil um einen sogenannten Cremator oder ein sogenanntes Cremaventil.

Weiterhin kann ebenso vorgesehen sein, dass der Wasserkessel in eine erste Kammer und eine zweite Kammer unterteilt ist, welche erste Kammer zur Aufnahme von Wasser und welche zweite Kammer zur Aufnahme von Milch vorgesehen ist. Dabei kann die erste Kammer eine externe Druckquelle sowie eine untere Steigleitung aufweisen, welche mit einem ersten temperaturgesteuerten Schaltventil ausgestattet ist, und die zweite Kammer ebenfalls eine externe Druckquelle sowie eine Steigleitung aufweisen, welche mit einem zweiten temperaturgesteuerten Schaltventil ausgestattet ist. Mittels einer derartig ausgestalteten Ausführung kann zugleich Wasser zum Brühen des Kaffees und Milch erhitzt werden, um beispielsweise einen Cappuccino oder einen Milchkaffee herstellen zu können. Die zur Aufnahme von Wasser vorgesehene erste Kammer des Wasserkessels, die erste externe Druckquelle und das erste temperaturgesteuerte Schaltventil kann dabei entsprechend der zuvor dargestellten Ausführungsformen des Wasserkessels ausgebildet sein. Während die externe Druckquelle der zweiten Kammer der externen Druckquelle der ersten Kammer entsprechend ausgestaltet sein kann, kann das in der zweiten, zur Aufnahme von Milch vorgesehenen Kammer vorgesehene zweite temperaturgesteuerte Schaltventil hingegen auf eine Temperatur von 55°C bis 60°C konfiguriert sein, sodass die zu erhitzende Milch nicht an- oder überkocht. Die ausreichend erhitzte Milch kann aufgrund einer Druckbeaufschlagung über die Steigleitung aus der zweiten Kammer gepresst, und beispielsweise direkt in einen Behälter geleitet werden, und wird dabei bereits aufgeschäumt. Um den Aufschäumungseffekt der erhitzten Milch zu verbessern, kann die zweite Steigleitung weiterhin mit einem Milchaufschäumerventil ausgestattet sein.

Einen weiteren Bestandteil der vorliegenden Erfindung bildet ein Verfahren zur Herstellung eines Heißgetränks, vorzugsweise von Kaffee oder Espresso, und zwar insbesondere mittels einer Ausführungsvariante der zuvor beschriebenen Espresso-Kaffeemaschine. Das erfindungsgemäße Verfahren umfasst dabei zumindest folgende Verfahrensschritte:
- Eingießen einer vorgesehenen Wassermenge in den unteren Wasserkessel,
- Einsetzen des mit einer Steigleitung versehenen Aufnahmeelements in den Wasserkessel, welches Aufnahmeelement in einem Aufnahmebereich mit losem oder in einer Kaffeekapsel oder einem Zwischenbehälter befindlichem Kaffeepulver versehen ist,
- Verbinden des mit einem Steigrohr versehenen Kannenoberteils mit dem Wasserkessel, sodass zwischen dem Wasserkessel und dem Kannenoberteil eine Fluidverbindung entsteht,
- Druckbeaufschlagung des Inneren des Wasserkessels mittels einer externen Druckquelle,
- Beaufschlagung des druckbeaufschlagten Wasserkessels mit Wärmeenergie,
- Öffnung des Wasserdurchflusses durch die Steigleitung mittels eines an der Steigleitung angeordneten temperaturgesteuerten Schaltventils bei einer Wassertemperatur zwischen 90°C und 100°C, vorzugsweise zwischen 92°C und 96°C.

Es sei an dieser Stelle ausdrücklich erwähnt, dass alle Aspekte und Ausführungsvarianten, die im Zusammenhang mit der erfindungsgemäßen Espresso-Kaffeemaschine erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Espresso-Kaffeemaschine von bestimmten Aspekten und/oder Zusammenhängen und/oder Wirkungen die Rede ist, so gilt dies gleichermaßen für das erfindungsgemäße Verfahren zur Bereitung eines Heißgetränks. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Espresso-Kaffeemaschine betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Espresso-Kaffeemaschine.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer Ausführungsvariante einer erfindungsgemäßen Espresso-Kaffeemaschine.
Fig. 2 zeigt einen Detailausschnitt der Espresso-Kaffeemaschine gemäß Fig. 1.
Fig. 3 zeigt eine weitere Ausführungsvariante der erfindungsgemäßen Espresso-Kaffeemaschine.
Fig. 4 zeigt eine weitere Ausführungsvariante der erfindungsgemäßen Espresso-Kaffeemaschine.
Figuren 5a bis 5d zeigen mehrere Verfahrensschritte einer Variante eines erfindungsgemäßen Verfahrens zur Herstellung eines Heißgetränks mittels einer Espresso-Kaffeemaschine.
Fig. 6 zeigt eine weitere Ausführungsvariante einer erfindungsgemäßen Espresso-Kaffeemaschine.

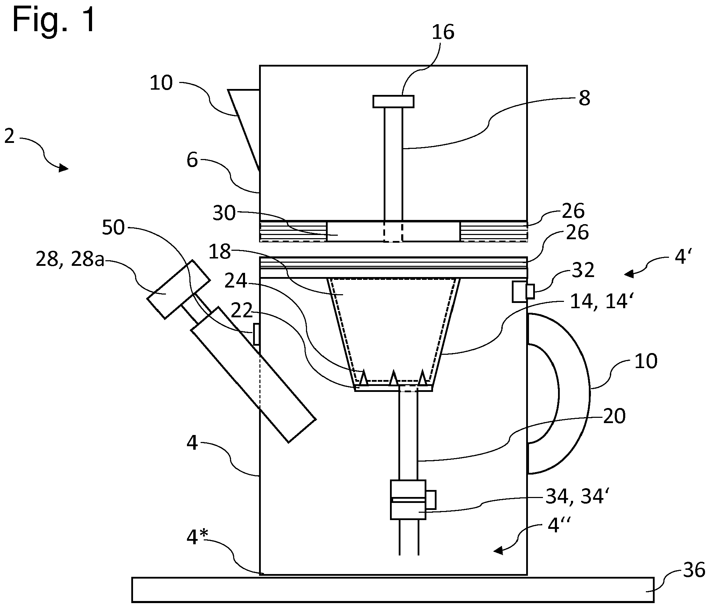

Für gleiche oder gleich wirkende Elemente der Erfindung verwenden die Figuren 1 bis 6 jeweils identische Bezugsziffern. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Espresso-Kaffeemaschine oder das erfindungsgemäße Verfahren ausgestaltet sein können und stellen keine abschließende Begrenzung dar. Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Es sei daher an dieser Stelle betont, dass die anhand der Figuren relativ konkret und gegenständlich beschriebenen Ausführungsbeispiele den in den Ansprüchen niedergelegten und im allgemeinen Teil der Beschreibung in den unterschiedlichsten Ausführungsvarianten definierten abstrakten Erfindungsgedanken in keiner Weise schmälern oder einschränken sollen. Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen der Espresso-Kaffeemaschine und/oder von Teilen der Maschine oder anderer gezeichneter Elemente in irgendeiner Weise in seinem Verständnis beeinträchtigt wäre. Die Figuren ermöglichen es dem Fachmann als Leser somit, anhand der konkret erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

In der Fig. 1 ist eine sinnvolle Ausführungsvariante einer erfindungsgemäßen Espresso-Kaffeemaschine 2 dargestellt. Die Espresso-Kaffeemaschine 2 weist einen unteren Wasserkessel 4 auf, welcher zur Aufnahme von Wasser vorgesehen ist. Auf der Oberseite 4' des Wasserkessels 4 ist ein Kannenoberteil 6 befestigbar. Vorzugsweise kann das Kannenoberteil 6 mittels einer Schraubverbindung 26 auf den Wasserkessel 4 aufgeschraubt werden, sodass eine drucksichere Verbindung zwischen dem Wasserkessel 4 und dem Kannenoberteil 6 gebildet wird. Das Kannenoberteil 6 ist zur Aufnahme fertig gebrühten Kaffees, oder auch Espressos, vorgesehen, welcher über wenigstens ein Steigrohr 8 in das Kannenoberteil 6 fließen kann. Das Steigrohr 8 kann zudem mit einem Druckventil 16 versehen sein. Um den gebrühten Kaffee komfortabel ausgießen zu können, ist das Kannenoberteil 6 mit einem Ausgießer 10 ausgestattet. Um weiterhin das Ergreifen der Espresso-Kaffeemaschine 2 zu erleichtern, weist der Wasserkessel 4 einen vorzugsweise schwer erwärmbaren Griff 12 auf. Um in dem Wasserkessel 4 aufgenommenes Wasser zu erhitzen, wird die Espresso-Kaffeemaschine 2 mit einer Bodenfläche 4* des Wasserkessels 4 auf eine externe Wärmequelle 36, wie beispielsweise in Form eines Gas- oder Benzinkochers, einer Feuerstelle oder einer Herdplatte, gestellt, sodass sich eine Kontaktfläche zur Wärmeübertragung bildet.

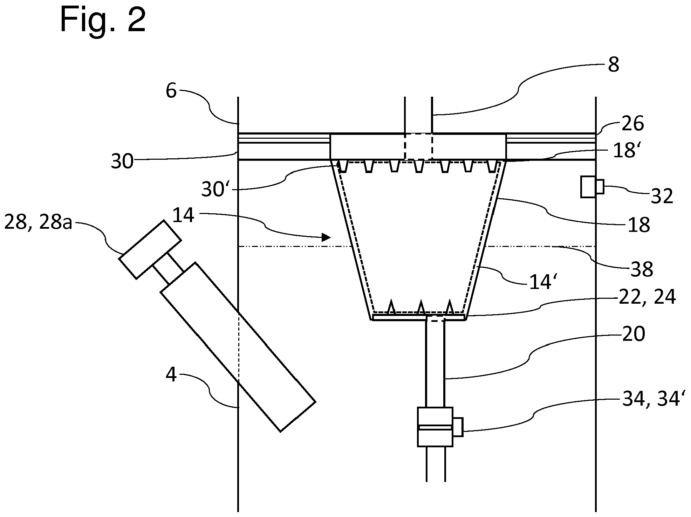

Ein vorzugsweise trichterförmiges Aufnahmeelement 14 kann zwischen dem Wasserkessel 4 und dem Kannenoberteil 6 eingesetzt werden. Wie in Fig. 2 vergrößert dargestellt, weist das Aufnahmeelement 14 einen Aufnahmebereich 14' auf, um loses Kaffeepulver oder Kaffeepulver aufzunehmen, welches sich in einer Kaffeekapsel 18 oder auch in einem Zwischenbehälter befindet.

Die in dem Ausführungsbeispiel der Fig. 1 gezeigte Espresso-Kaffeemaschine 2 ist insbesondere zur Verwendung von Kaffeekapseln 18 vorgesehen. Üblicherweise sind Kaffeekapseln 18 aus Aluminium oder Kunststoff gefertigt, sodass das Kaffeearoma innerhalb der geschlossenen Kaffeekapsel 18 konserviert werden kann. Ein wahlweise nutzbarer Zwischenbehälter, welcher mit losem Kaffeepulver befüllbar ist, kann ebenfalls aus Aluminium oder Kunststoff gefertigt sein. Das Aufnahmeelement 14 ist mit einer unteren Steigleitung 20 versehen, welches sich in einem eingesetzten Zustand des Aufnahmeelements 14 bis in einen unteren Bereich 4" des Wasserkessels 4 erstreckt. Das Aufnahmeelement 14 ist im unteren Bereich des Aufnahmebereichs 14' mit einer einem Mittel zur Durchlöcherung, beispielsweise in Form einer Einstechplatte 22, versehen, welche spitzförmig zulaufende Elemente 24 aufweist. Durch die spitzförmig zulaufenden Elemente 24 kann die Kaffeekapsel 18 beim Einbringen in den Aufnahmebereich 14' mit Löchern versehen werden, sodass das durch die Steigleitung 20 strömende erwärmte Wasser zu dem in den Kaffeekapseln 18 beinhalteten Kaffeepulver strömen kann. Da Kaffeekapseln 18 üblicherweise durch ein Verschlusselement, beispielsweise ausgebildet durch ein Folienelement 18' (vgl. Fig. 2), verschlossen sind, ist das Kannenoberteil 6 im Bereich des Steigrohrs 8 zudem mit einem Mittel zur Perforation, vorzugsweise in Form einer sogenannten Pyramidenplatte 30, versehen, welche das Folienelement 18' perforieren kann. Vorzugsweise weist die Pyramidenplatte 30 pyramidenförmig hervorstehende Elemente 30' auf. Um die Strömungsverbindung durch die Steigleitung 20 und das Steigrohr 8 aufrecht zu erhalten, ist die Pyramidenplatte 30 mit feinen Kanälen versehen.

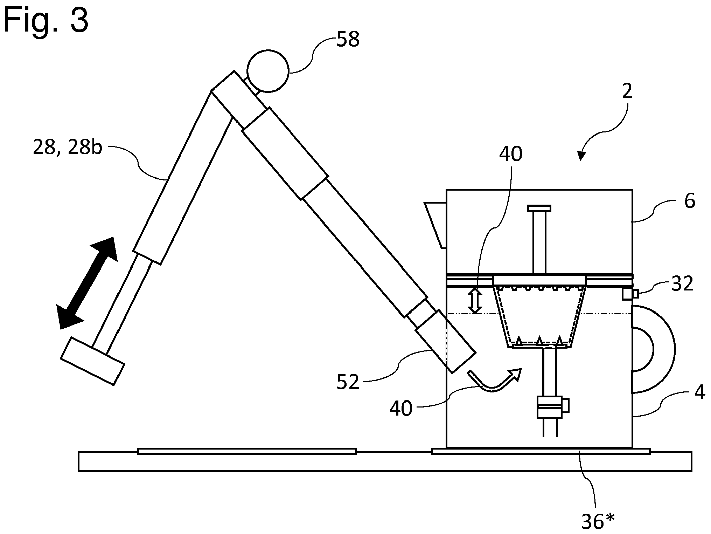

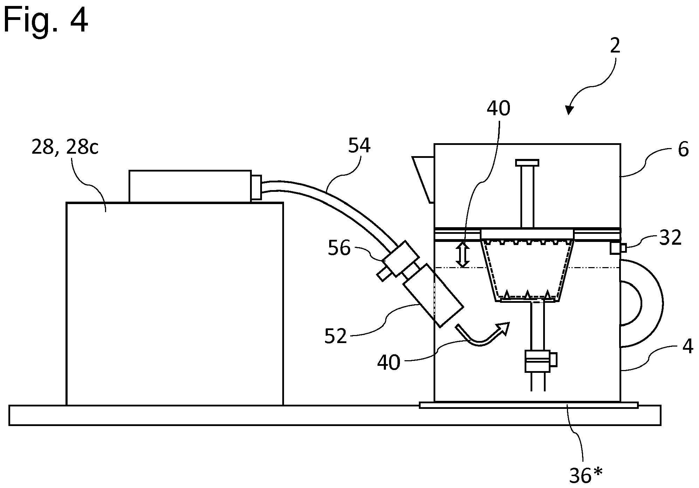

Der Wasserkessel 4 ist mittels einer externen Druckquelle 28 mit Druck beaufschlagbar. Beispielsweise handelt es sich bei der Druckquelle 28 um eine in den Wasserkessel 4 integrierte, manuell betätigbare Luftpumpe 28a. Die Fig. 3 und 4 zeigen jeweils weitere alternativ Möglichkeiten für geeignete Druckquellen 28. Mittels der Luftpumpe 28a kann Luft in den Wasserkessel 4 gepumpt werden, sodass im Inneren dessen ein Überdruck entsteht. Zur idealen Funktionsweise hat sich hierbei ein innerhalb des Wasserkessels 4 mittels der Luftpumpe 28a zu erzeugender Druck von beispielsweise 8 bis 10 bar erwiesen. Um den aktuell vorhandenen Druck im Inneren des Wasserkessels 4 ablesen zu können, kann ein Druckanzeigeelement 50 vorgesehen sein. Zur Vermeidung eines ggf. zu großen Überdrucks innerhalb des Wasserkessels 4 ist der Wasserkessel 4 zudem mit einem Sicherheitsventil, vorzugsweise in Form eines Druckventils 32, ausgestattet, durch welches Luft bei Überschreiten eines vorgegebenen Druckrichtwertes ausströmen kann.

Die Steigleitung 20, welche in den Wasserkessel 4 ragt, ist mit einem temperaturgesteuerten Schaltventil 34 ausgestattet. Das temperaturgesteuerte Schaltventil 34 ist vorzugsweise als ein Thermostatventil 34' ausgestaltet. Hierbei ist vorgesehen, dass das temperaturgesteuerte Schaltventil 34 bei einer vorbestimmten Grenztemperatur des im Wasserkessel 4 erhitzten Wasser öffnet und druckbeaufschlagtes erhitztes Wasser durch die Steigleitung 20 in Richtung des mit Kaffeepulver bestückten Aufnahmeelements 14 fließen kann. Für den Brühvorgang ideal ist eine Wassertemperatur von 92°C bis 96°C. Daher ist es nur zweckmäßig, als vorbestimmte Grenztemperatur des temperaturgesteuerten Schaltventils 34 eine Temperatur von 92 °C bis 96°C vorzugeben. Sobald das Wasser die für den Brühvorgang ideale Temperatur aufweist öffnet sich das temperaturgesteuerte Schaltventil 34, sodass das erhitzte Wasser durch die Saugleitung 20 aufsteigen kann.

Durch die in dem Aufnahmebereich 14' des Aufnahmeelements 14 aufgenommene und mit Kaffeepulver gefüllte Kaffeekapsel strömt das Wasser über das Steigrohr 8 weiter in das Kannenoberteil 6. Durch das Druckventil 16, welches am Steigrohr 8 angebracht ist, wird zudem sogenannter "Crema" gebildet. Die Crema entsteht, wenn der gebrühte Kaffee mit Druck durch das Druckventil 16 gedrückt wird. In manchen Fällen kann zur Herstellung einer Crema sogar auf ein Druckventil 16 verzichtet werden, da der vorhandene Druck, mit welchem das Wasser bzw. der gebrühte Kaffee nach oben gepresst wird, ebenfalls zur Bildung einer Crema beitragen kann. Aus dem Kannenoberteil 6 kann anschließend fertig gebrühter Kaffee entnommen werden. Hierzu kann an der Espresso-Kaffeemaschine 2 zusätzlich ein nicht dargestelltes Anzeigemittel vorhanden sein, durch welches angezeigt wird, sobald sich der fertig gebrühte Kaffee in dem Kannenoberteil befindet bzw. der Brühvorgang abgeschlossen ist.

In Fig. 2 ist ein Ausschnitt des Bereichs des Aufnahmeelements 14 (vgl. Fig. 1) in vergrößerter Form dargestellt. Der Wasserkessel 4 und das Kannenoberteil 6 der Espresso-Kaffeemaschine 2 sind hierbei mittels der Schraubverbindung 26 zusammen geschraubt. Der Wasserkessel 4 ist bereits mit Wasser gefüllt, was anhand der strichpunktierten Linie 38 symbolisiert ist. Bei der vorgesehenen Wassermenge ist lediglich zu beachten, dass sich eine Füllhöhe des Wassers unterhalb des Sicherheitsventils 32 ergibt. Das Aufnahmeelement 14 ist in den Wasserkessel 4 eingefügt. Insgesamt sind das Aufnahmeelement 14 bzw. der Wasserkessel 4 und das Kannenoberteil 6 derartig ausgestaltet, sodass zwischen den zusammengeschraubten Bestandteilen der Espresso-Kaffeemaschine 2 lediglich durch die Steigleitung 20, den Aufnahmebereich 14' des Aufnahmeelements 14, die Pyramidenplatte 30 sowie das Steigrohr 8 eine Strömungsverbindung zwischen dem Wasserkessel 4 und dem Kannenoberteil 6 besteht.

In dem Aufnahmebereich 14' des Aufnahmeelements 14 ist eine Kaffeekapsel 18 eingebracht. Durch die im Aufnahmebereich 14' angeordnete, mit spitzförmig zulaufenden Elementen 24 versehene Einstechplatte 22 wird die Kaffeekapsel 18 beim Einsetzen in den Aufnahmebereich 14' mit Löchern versehen, durch welche Wasser in die Kaffeekapsel 18 bzw. durch das Kaffeepulver in der Kaffeekapsel 18 strömen kann. Die zum Kannenoberteil 6 gehörende Pyramidenplatte 30 wird durch das Zusammenschrauben des Kannenoberteils 6 und des Wasserkessels 4 nahe des Folienelements 18' der Kaffeekapsel 18 platziert, sodass das Folienelement 18' ebenfalls durchlöchert wird, insbesondere sobald Druck in dem Wasserkessel 4 erzeugt wird bzw. erhitztes Wasser in Richtung der Kaffeekapsel 18 strömt. Da die Kaffeekapsel 18 hierdurch in Richtung der Pyramidenplatte 30 gedrückt wird, erzeugen die pyramidenförmig hervorstehenden Elemente 30' der Pyramidenplatte 30 Perforierungen in dem Folienelement 18'.

Bevor das sich im Wasserkessel 4 befindende Wasser erhitzt wird, kann mit der Druckquelle 28 in Form einer Luftpumpe 28a Druck innerhalb des Wasserkessels 4 erzeugt werden. Hierbei ist ein zu erzeugender Druck von beispielsweise 8 bar bis 10 bar vorgesehen. Durch die Wärmequelle 36 wird das sich im Wasserkessel 4 befindende Wasser anschließend solange erhitzt, bis das Wasser eine Wassertemperatur von 92°C bis 96°C erreicht. Sobald das Wasser eine Wassertemperatur von 92°C bis 96°C aufweist, öffnet sich das temperaturgesteuerte Schaltventil 34, sodass das erhitzte Wasser durch die Steigleitung 20 in Richtung des Aufnahmeelements 14 strömen kann. Ist das Wasser zu stark erhitzt und weist eine Temperatur oberhalb von 96°C auf, so schließt das temperaturgesteuerte Schaltventil 34 wieder. Dieser Zustand kann beispielsweise anhand des Druckanzeigeelements 50 sichtbar gemacht werden, sodass die durch die externe Wärmequelle 36 bereitgestellte Wärmezufuhr im Bereich des Wasserkessels 4 der Espresso-Kaffeemaschine 2 gestoppt oder reduziert werden kann, um das Wasser im Wasserkessel 4 wieder zu einer geeigneten Temperatur abkühlen zu lassen.

In der schematischen Teilschnittansicht der Fig. 3 ist eine weitere Ausführungsvariante einer erfindungsgemäßen Espresso-Kaffeemaschine 2 abgebildet. Die Espresso-Kaffeemaschine 2 ist in diesem Fall für einen Hausgebrauch vorgesehen und ist auf einer Wärmequelle 36 in Form einer Küchenherdplatte 36* abgestellt. Alternativ kann die Espresso-Kaffeemaschine 2 im Outdoor-Gebrauch auch beispielsweise auf einer Feuerstelle oder einem Gas-oder Benzinkocher platziert werden. Als Druckquelle 28 ist hierbei statt einer integrierten, manuell betätigbaren Luftpumpe eine vorzugsweise handelsübliche Fahrradluftpumpe 28b vorgesehen. Um Luft in den Wasserkessel 4 pumpen zu können, ist an dem Wasserkessel 4 ein Ventileinsatz 52 eingebracht. Die Fahrradluftpumpe 28b kann, ggf. unter Zwischenschaltung eines nicht abgebildeten Adapterstückes, an den Ventileinsatz 52 angeschlossen werden. Mittels eines geeigneten, austauschbaren Adapterstückes kann der Anschluss an den Ventileinsatz 52 passend zu der jeweilig vorhandenen Druckluftquelle ausgebildet werden. Zudem kann die Fahrradluftpumpe 28b mit einem zusätzlichen Anzeigemittel 58, wie einem Druckmessgerät, ausgestattet sein, um die ausreichende Zufuhr von Druckluft in den Wasserkessel 4 leicht ablesen zu können. Durch eine derartige Ausgestaltung kann dem Wasserkessel 4 ohne großen Aufwand Druckluft zugeführt werden.

So zeigt die schematische Darstellung der Fig. 4 eine weitere Ausführungsform oder -variante einer erfindungsgemäßen Espresso-Kaffeemaschine 2. Die Espresso-Kaffeemaschine 2 wird auch diesem Fall typischerweise im Hausgebrauch genutzt. Daher ist diese ebenfalls auf einer Wärmequelle 36 in Form einer Küchenherdplatte 36* abgestellt. Als Druckquelle 28 ist in dieser Ausführungsform ein elektrisch betreibbarer 230V-Druckluftkompressor 28c vorgesehen. Da derartige Kompressoren 28c oftmals auch zum Inventar von Werkstätten zählen, ist natürlich auch die Erhitzung des Wasserkessels 4 mittels eines Gas- oder Benzinkochers denkbar. Ein Druckluftschlauch 54 des Kompressors 28c kann über einen passenden Anschluss 56 verfügen, sodass der hier ebenfalls vorhandene Ventileinsatz 52 des Wasserkessels 4 nicht unbedingt mit einem zusätzlichen Adapterstück ausgestattet werden muss, um den Kompressor 28c mit dem Ventileinsatz 52 zu verbinden. Anhand von Einstellungsmitteln des Kompressors 28c können vorzugsweise bereits Voreinstellungen für die Druckluftzufuhr getroffen werden, um den Wasserkessel 4 in geeigneter Weise mit Druckluft zu befüllen.

Selbstverständlich stellt der gezeigte Kompressor 28c lediglich eine denkbare Ausführungsvariante dar. Für den mobilen Einsatz sind auch leistungsfähige und sehr kompakte Kleinkompressoren verfügbar, deren elektromotorischer Antrieb bspw. mit Akkumulatoren oder Trockenbatterien betrieben werden kann, so dass damit ein kompakter mobiler Kaffeebereiter realisiert werden kann.

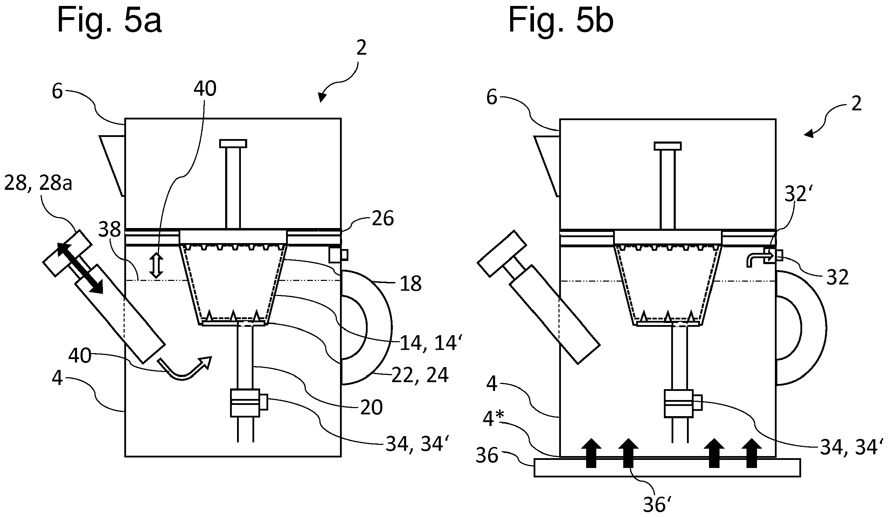

Die Figuren 5a bis 5d zeigen anhand mehrerer Abbildungen einer sinnvollen oder besonders bevorzugten erfindungsgemäßen Espresso-Kaffeemaschine 2 aufeinander folgende Verfahrensschritte eines ebenfalls zur Erfindung gehörenden Verfahrens zur Herstellung eines Heißgetränks. So zeigt die Fig. 5a eine Espresso-Kaffeemaschine 2, bei welcher sich bereits Wasser in dem Wasserkessel 4 befindet. In den Aufnahmebereich 14' des Aufnahmeelements 14 ist eine Kaffeekapsel 18 eingesetzt, und aufgrund der im Aufnahmebereich 14' angeordneten Einstechplatte 22 mit Löchern versehen. Das Aufnahmeelement 14 ist in den Wasserkessel 4 eingesetzt und das Kannenoberteil 6 auf den Wasserkessel 4 aufgeschraubt. Mit Hilfe der Luftpumpe 28a soll nun ein Überdruck, symbolisiert durch den Pfeil 40, in dem Wasserkessel 4 erzeugt werden. Insgesamt ist ein zu erzeugender (Über-)Druck von 8 bar bis 10 bar vorgesehen. Da das Wasser nicht die erforderliche Temperatur von 92°C bis 96°C aufweist, ist das temperaturgesteuerte Schaltventil 34 geschlossen, sodass kein Wasser durch die Steigleitung 20 in die Kaffeekapsel 18 strömen kann.

Im folgenden Schritt, welcher in Fig. 5b dargestellt ist, soll nun eine Kontaktfläche der Espresso-Kaffeemaschine 2 mit einer Wärmequelle 36 in Kontakt gebracht werden. Auf diese Weise kann Wärmeenergie, symbolisiert durch die Pfeile 36', von der Wärmequelle 36 an die eine Bodenfläche 4* des Wasserkessels 4, und somit an das Wasser in dem Wasserkessel 4 übertragen werden. Das temperaturgesteuerte Schaltventil 34 ist hierbei weiterhin geschlossen, da das Wasser noch nicht die erforderliche Temperatur von 92°C bis 96°C erreicht hat. Sofern der Druck innerhalb des Wasserkessels 4 aufgrund der fortschreitenden Erwärmung des Wassers einen Grenzwert überschreitet, kann Druck über das Sicherheitsventil 32 abgebaut werden (vgl. Pfeil 32').

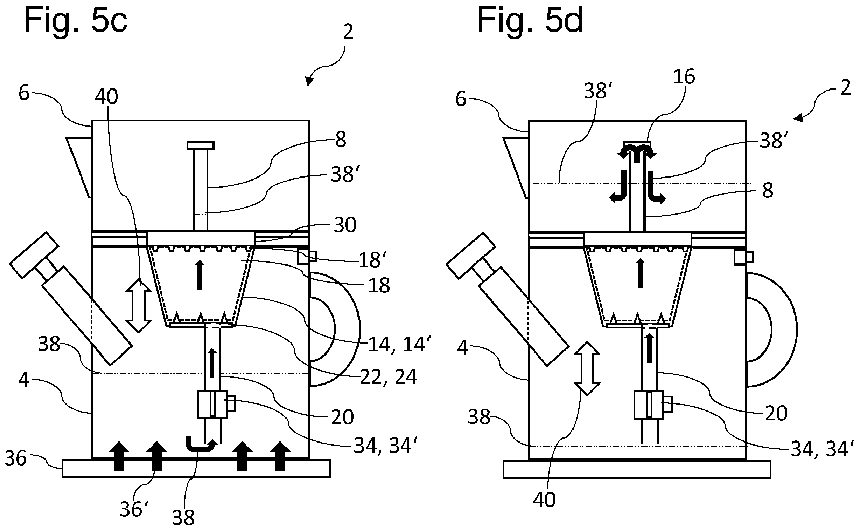

Sobald das Wasser die vorgesehene Wassertemperatur von 92°C bis 96°C erreicht, öffnet das temperaturgesteuerte Schaltventil 34, wie es der folgende Schritt in Fig. 5c zeigt. Der durch das Erhitzen des Wassers entstandene und durch das Pumpen mit der Luftpumpe 28a erzeugte Überdruck (vgl. 40) presst das erhitzte Wasser nun durch das offene temperaturgesteuerte Schaltventil 34 in die Steigleitung 20, und anschließend in die sich im Aufnahmebereich 14' des Aufnahmeelements 14 befindende Kaffeekapsel 18. Durch den Druck 40 sowie das einströmende Wasser wird das die Kaffeekapsel 18 verschließende Folienelement 18' an die Pyramidenplatte 30 gepresst und dadurch sicher perforiert. Das Wasser kann nun das in der Kaffeekapsel 18 aufgenommene Kaffeepulver durchströmen, sodass fertig gebrühter Kaffee 38' in das Steigrohr 8 steigt.

Dies ist nochmals in der Fig. 5d verdeutlicht. Der fertig gebrühte Kaffee 38' kann nun über das Steigrohr 8 aufsteigen und in das Kannenoberteil 6 fließen. Da der gebrühte Kaffee 38' durch das am oberen Ende des Steigrohrs 8 angeordnete Druckventil 16 strömt, entsteht eine stabile Crema auf dem Kaffee 38'. Das erhitzte Wasser kann solange in Richtung der Kaffeekapsel 18 strömen, bis der Überdruck zu niedrig ist, der Wasserstand 38 unterhalb die Erreichbarkeit durch die Steigleitung 20 gesunken ist oder die Temperatur des Wassers einen zu hohen bzw. zu niedrigen Wert aufweist.

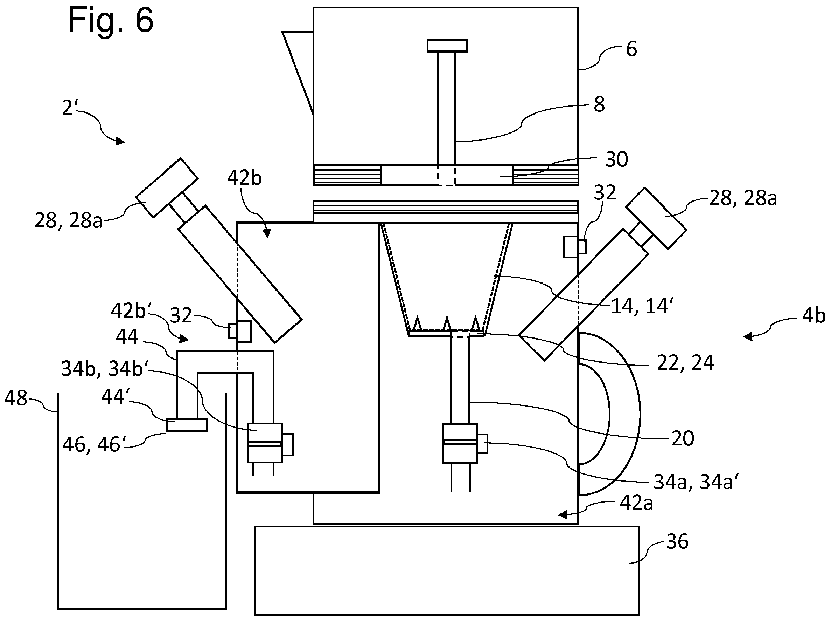

Die Fig. 6 zeigt eine modifizierte Ausführungsform einer der denkbaren oder praktisch einsetzbaren Varianten der erfindungsgemäßen Espresso-Kaffeemaschine 2'. Wie auch die in den vorherigen Figuren 1 bis 4 dargestellte Espresso-Kaffeemaschine 2 weist auch die in Fig. 6 verdeutlichte Espresso-Kaffeemaschine 2' einen Wasserkessel 4b sowie ein Kannenoberteil 6 auf. Das Kannenoberteil 6 ist mit einer Pyramidenplatte 30 sowie einem Steigrohr 8 ausgestattet. Der Wasserkessel 4b ist hierbei jedoch in eine erste Kammer 42a und eine zweite Kammer 42b unterteilt. Die erste Kammer 42a ist vergleichbar ausgestattet wie der Wasserkessel 4 der in den Figuren 1 bis 4 beschriebenen Espresso-Kaffeemaschine 2 und zur Aufnahme von Wasser vorgesehen.

So ist ein Pumpelement 28 in Form einer Luftpumpe 28a an dem Wasserkessel 4b vorgesehen, mittels welchem manuell ein Druck von 5 bar bis 10 bar in der ersten Kammer 42a des durch Zusammenfügen mit dem Kannenoberteil 6 geschlossenen Wasserkessels 4b erzeugt werden kann. Auch ein Druckventil 32 ist für die erste Kammer 42a in der Wand des Wasserkessels 4b eingebracht. Ein Aufnahmeelement 14 kann in den Wasserkessel 4b eingesetzt werden. Das Aufnahmeelement 14 weist einen Aufnahmebereich 14' zur Aufnahme beispielsweise einer Kaffeekapsel 18 auf, welcher mit einer Einstechplatte 22 versehen ist. Zudem ist das Aufnahmeelement 14 mit einer Steigleitung 20 ausgestattet, durch welche erhitztes Wasser in Richtung der Kaffeekapsel 18 strömen kann. An der Steigleitung 20 ist ein erstes temperaturgesteuertes Schaltventil 34a vorzugsweise in Form eines Thermostatventils 34a' angebracht. Das erste temperaturgesteuerte Schaltventil 34 ist derartig ausgebildet, dass der Durchfluss durch die Steigleitung 20 lediglich dann frei gegeben ist, wenn das Wasser eine Temperatur von 92°C bis 96°C aufweist.

Die zweite Kammer 42b ist zur Aufnahme von Milch vorgesehen. Hierzu ist die zweite Kammer 42b über die Öffnung des Wasserkessels 4b zugänglich, sofern das Aufnahmeelement 14 noch nicht in dem Wasserkessel 4b eingebracht ist. Ein weiteres Pumpelement 28 in Form einer Luftpumpe 28a ist zur Erhöhung des Drucks in der zweiten Kammer 42b vorgesehen. Hierbei kann beispielsweise ebenfalls ein Druck von 5 bar bis 10 bar in der zweiten Kammer 42b erzeugt werden. Zudem weist der Wasserkessel 4b ein weiteres Druckventil 32 für die zweite Kammer 42b auf. Eine Steigleitung 44 verläuft vom unteren Bereich der zweiten Kammer 42b durch eine Außenwand 42b' des Wasserkessels 4b nach draußen, sodass sich ein Ausguss 44' für die erhitzte Milch bildet. Die Steigleitung 44 ist ebenfalls mit einem zweiten temperaturgesteuerten Schaltventil 34b vorzugsweise in Form eines Thermostatventils 34b' versehen. Im Gegensatz zu den notwendigen hohen Wassertemperaturen zur Kaffeezubereitung ist zur Bereitung von Milch eine Temperatur von maximal 60°C erforderlich. Das zweite temperaturgesteuerte Schaltventil 34b ist also derartig konfiguriert, sodass sich das Ventil 34b bei einer Milchtemperatur von 55°C bis 60°C öffnet und erhitzte Milch durch die Steigleitung 44 strömen lässt. Um insbesondere aufgeschäumte Milch zur Bereitung beispielsweise eines Cappuccinos oder eines Milchkaffees zu erhalten, ist die Steigleitung 44 im Bereich des Ausgusses 44' mit einem Druckventil 46 in Form eines Milchaufschäumerventils 46' versehen. Die durch den Ausguss 44' austretende erhitzte Milch kann in einem Gefäß 48 aufgefangen werden.

Durch eine derartige Ausgestaltung des Wasserkessels 4b kann zeitgleich ein Kaffee zubereitet und Milch erhitzt werden. Beispielsweise mittels einer vorgesetzten Anordnung der zweiten Kammer 42b ist eine langsamere Erwärmung der Milch möglich, da diese zum einen eine weniger hohe Temperatur aufweisen muss, und zum anderen hierdurch keine direkte Kontaktfläche zu der Wärmequelle 36 besitzt. Auf diese Weise kann auch das Risiko des Anbrennens der Milch vermindert werden. Als zusätzlichen Anbrennschutz kann das Innere der zweiten Kammer 42b eine spezielle Beschichtung aufweisen, wie beispielsweise eine Beschichtung aus Polytetrafluorethylen.

### Bezugszeichenliste

- 2, 2': Espresso-Kaffeemaschine
- 4: Wasserkessel
- 4': Oberseite des Wasserkessels
- 4": unterer Bereich des Wasserkessels
- 4*: Bodenfläche des Wasserkessels
- 4b: Wasserkessel
- 6: Kannenoberteil
- 8: Steigrohr
- 10: Ausgießer
- 12: Griff
- 14: Aufnahmeelement
- 14': Aufnahmebereich
- 16: Druckventil
- 18: Kaffeekapsel
- 18': Verschlusselement, Folienelement
- 20: Steigleitung
- 22: Einstechplatte
- 24: spitz zulaufende Elemente
- 26: Schraubverbindung
- 28: Druckquelle
- 28a: integrierte Luftpumpe
- 28b: Fahrradluftpumpe
- 28c: elektrisch betreibbarer Druckluftkompressor
- 30: Pyramidenplatte
- 30': pyramidenförmig hervorstehende Elemente
- 32: Druckventil
- 32': Druckabbau
- 34: temperaturgesteuertes Schaltventil
- 34': Thermostatventil
- 34a, 34a': erstes temperaturgesteuertes Schaltventil / Thermostatventil der ersten Kammer
- 34b, 34b': zweites temperaturgesteuertes Schaltventil / Thermostatventil der zweiten Kammer
- 36: Wärmequelle
- 36*: Küchenherdplatte
- 36': Wärmeenergie
- 38: Wasser/Wasserfüllhöhe
- 38': fertig gebrühter Kaffee
- 40: Pfeil (Überdruck)
- 42a: erste Kammer
- 42b: zweite Kammer
- 42b': Außenwand der zweiten Kammer bzw. des Wasserkessels
- 44: Steigleitung
- 44': Ausguss
- 46: Druckventil
- 46': Milchaufschäumerventil
- 48: Gefäß
- 50: Druckanzeigeelement
- 52: Ventileinsatz
- 54: Druckluftschlauch
- 56: Anschluss
- 58: Anzeigemittel

## Patentansprüche

1. Mehrteilige Espresso-Kaffeemaschine (2), die zumindest einen unteren Wasserkessel (4) zur Aufnahme von Wasser, einen auf dessen Oberseite befestigbaren und mit wenigstens einem Steigrohr (8) ausgestatteten Kannenoberteil (6) zur Aufnahme gebrühten Kaffees (38') sowie ein dazwischen einsetzbares Aufnahmeelement (14) zur Aufnahme von losem oder in einer Kaffeekapsel (18) oder einem Zwischenbehälter befindlichem Kaffeepulver umfasst, wobei eine Bodenfläche (4*) des Wasserkessels (4) eine Kontaktfläche zur Wärmeübertragung von einer externen Wärmequelle (36) bildet,
- wobei der Wasserkessel (4) mit einer externen Druckquelle (28) zur insbesondere einstellbaren Druckbeaufschlagung des Inneren des Wasserkessels (4) ausgestattet ist, und
- wobei eine von einer Bodenseite des Aufnahmeelements (14) in den Wasserkessel (4) reichende untere Steigleitung (20) mit einem temperaturgesteuerten Schaltventil (34), insbesondere einem Thermostatventil (34') ausgestattet ist, das bei einer Grenztemperatur des im Wasserkessel (4) erhitzten Wassers öffnet und das druckbeaufschlagte Wasser durch das mit Kaffeepulver gefüllte Aufnahmeelement (14) hindurchtreten und als gebrühten Kaffee (38') durch das im Kannenoberteil (6) befindliche Steigrohr (8) in das Kannenoberteil (6) strömen lässt.

2. Kaffeemaschine nach Anspruch 1, bei der das Aufnahmeelement (14) einen Aufnahmebereich (14') zur Aufnahme einer Kaffeekapsel (18) oder eines Zwischenbehälters aufweist, wobei das Aufnahmeelement (14) insbesondere Mittel zur Durchlöcherung (22, 24) einer in den Aufnahmebereich (14') des Aufnahmeelements (14) einzusetzenden Kaffeekapsel (18) oder eines Zwischenbehälters aufweist.

3. Kaffeemaschine nach Anspruch 1 oder 2, bei der das Kannenoberteil (6) ein Mittel zur Perforation (30) eines zur Abdeckung und/oder zum Verschluss einer Kaffeekapsel (18) oder eines Zwischenbehälters vorgesehenen Verschlusselements (18') aufweist, wobei es sich bei dem Mittel zur Perforation (30) des Verschlusselements insbesondere um eine Pyramidenplatte (30) handelt.

4. Kaffeemaschine nach Anspruch 1, wobei ein feiner Siebträger loses, in dem Aufnahmebereich (14') des Aufnahmeelements (14) aufgenommenes Kaffeepulver abdeckt.

5. Kaffeemaschine nach einem der Ansprüche 1 bis 4, bei der das temperaturgesteuerte Schaltventil (34) und/oder das Thermostatventil (34') einen Wasserdurchfluss durch die untere Steigleitung (20) bei einer Wassertemperatur von etwa 88°C bis 100°C, insbesondere bei einer Wassertemperatur von etwa 90°C bis knapp unter 100°C und vorzugsweise bei einer Wassertemperatur von 92°C bis 96°C, erlaubt.

6. Kaffeemaschine nach einem der Ansprüche 1 bis 5, bei es sich bei dem temperaturgesteuerten Schaltventil (34) um ein Thermostatventil (34') handelt, wobei es sich bei dem Thermostatventil (34') insbesondere um ein mechanisches Thermostatventil (34') handelt, welches ein Dehnstoffelement aufweist.

7. Kaffeemaschine nach einem der Ansprüche 1 bis 6, wobei es sich bei der externen Druckquelle (28) um eine manuell betätigbare Luftpumpe (28a) handelt, welche zur Erzeugung einer Druckbeaufschlagung des Inneren des Wasserkessels (4) von etwa 5 bar bis etwa 10 bar, vorzugsweise von 6 bar bis 8 bar, geeignet ist, wobei die manuell betätigbare Luftpumpe (28a) insbesondere fest an dem Wasserkessel (4) befestigt und/oder in den Wasserkessel integriert ist.

8. Kaffeemaschine nach einem der Ansprüche 1 bis 6, bei welcher der Wasserkessel mit einem Ventileinsatz (52) versehen ist, über welchen mittels einer externen, nicht an dem Wasserkessel befestigten oder in den Wasserkessel integrierten Druckquelle (28) Druckluft in den Wasserkessel einbringbar ist, welche zur Erzeugung einer Druckbeaufschlagung des Inneren des Wasserkessels (4) von etwa 5 bar bis 10 bar, vorzugsweise von 6 bar bis 8 bar, geeignet ist.

9. Kaffeemaschine nach Anspruch 8, bei welcher der Ventileinsatz (52) mit einer externen Druckquelle (28) in Form einer handbetätigbaren Luftpumpe (28b) oder in Form eines elektrisch betriebenen Kompressors (28c) zur Einbringung von Druckluft in den Wasserkessel (4) verbindbar ist.

10. Kaffeemaschine nach einem der Ansprüche 1 bis 9, bei welcher der Wasserkessel (4) mit einem Druckanzeigeelement (50) ausgestattet ist.

11. Kaffeemaschine nach einem der Ansprüche 1 bis 10, wobei der Wasserkessel (4) mit einem Druckventil (32) ausgestattet ist, durch welches Luft bei Überschreiten eines vorgegebenen Druckrichtwertes ausströmt.

12. Kaffeemaschine nach einem der Ansprüche 1 bis 11, wobei das Steigrohr (8) des Kannenoberteils (6) mit einem Druckventil (16) versehen ist.

13. Kaffeemaschine (2, 2') nach einem der vorhergehenden Ansprüche, wobei der Wasserkessel (4) in eine erste Kammer (42a) und eine zweite Kammer (42b) unterteilt ist, welche erste Kammer (42a) zur Aufnahme von Wasser und welche zweite Kammer (42b) zur Aufnahme von Milch vorgesehen sind.

14. Kaffeemaschine (2, 2') nach Anspruch 13, wobei die erste Kammer (42a) eine externe Druckquelle (28) sowie eine untere Steigleitung (8) aufweist, welche mit einem ersten temperaturgesteuerten Schaltventil (34a, 34a') ausgestattet ist, und wobei die zweite Kammer (42b) ebenfalls eine externe Druckquelle (28) sowie eine Steigleitung (44) aufweist, welche mit einem zweiten temperaturgesteuerten Schaltventil (34b, 34b') ausgestattet ist.

15. Verfahren zur Herstellung eines Heißgetränks mittels einer Espresso-Kaffeemaschine (2, 2'), die insbesondere gemäß einem der Ansprüche 1 bis 14 ausgebildet und/oder ausgestattet ist, wobei das Verfahren zumindest die folgenden Verfahrensschritte in der nachfolgenden oder einer davon abweichenden Reihenfolge umfasst:
- Eingießen einer vorgesehenen Wassermenge in einen unteren Wasserkessel (4) der Kaffeemaschine (2, 2'),
- Einsetzen eines mit einer Steigleitung (20) versehenen Aufnahmeelements (14) in den Wasserkessel (4), welches Aufnahmeelement (14) in einem Aufnahmebereich (14') mit losem oder in einer Kaffeekapsel (18) oder einem Zwischenbehälter befindlichem Kaffeepulver versehen ist,
- Verbinden eines mit einem Steigrohr (8) versehenen Kannenoberteils (6) mit dem Wasserkessel (4), sodass zwischen dem Wasserkessel (4) und dem Kannenoberteil (6) eine Fluidverbindung entsteht,
- Druckbeaufschlagung des Inneren des Wasserkessels (4) mittels einer externen Druckquelle (28),
- Beaufschlagung des druckbeaufschlagten Wasserkessels (4) mit Wärmeenergie,
- Öffnung des Wasserdurchflusses durch die Steigleitung (20) mittels eines an der Steigleitung (20) angeordneten temperaturgesteuerten Schaltventils (34, 34') bei einer Wassertemperatur zwischen etwa 90°C und 100°C, vorzugsweise zwischen 92°C und 96°C.
